(19) Europäisches Patentamt

European Patent Office

Office européen des brevets

(11) Veröffentlichungsnummer: **0 300 352 B1**

## (12) EUROPÄISCHE PATENTSCHRIFT

(45) Veröffentlichungstag der Patentschrift: **09.12.92**

(21) Anmeldenummer: **88111242.9**

(22) Anmeldetag: **13.07.88**

(51) Int. Cl.⁵: **H04B 3/23**, H04B 3/46

(54) **Prüfeinrichtung für digitale Echokompensatoren.**

(30) Priorität: **16.07.87 DE 3723569**

(43) Veröffentlichungstag der Anmeldung:
**25.01.89 Patentblatt 89/04**

(45) Bekanntmachung des Hinweises auf die
Patenterteilung:
**09.12.92 Patentblatt 92/50**

(84) Benannte Vertragsstaaten:
**AT BE CH DE ES FR GB GR IT LI NL SE**

(56) Entgegenhaltungen:
**EP-A- 0 156 315**
**WO-A-85/03607**

**NATIONAL TELECOMMUNICATIONS CONFE-
RENCE 1979, Washington, DC, 27.-29. November 1979, Band 3, Seiten 48.5.1 - 48.5.5, IEEE,
New York, US; G.K. HELDER et al.: "Echo
canceller standardization in the CCITT"**

**TELCOM REPORT, Band 9, Nr. 6, 1986, Seiten
352-357, München, DE; H. KEMMESIES et al.:
"Echokompensator in weltweiten Nachrichtenverbindungen"**

(73) Patentinhaber: **SIEMENS AKTIENGESELL-
SCHAFT**
**Wittelsbacherplatz 2**
**W-8000 München 2(DE)**

(72) Erfinder: **Kuhn, Frank, Dipl.-Ing.**
**Franz-Kaim-Strasse 9**
**W-8000 München 71(DE)**
Erfinder: **Pfeil, Dirsko, von**
**Dammstrasse 14**
**W-8021 Hohenschäftlarn(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Prüfeinrichtung für digitale Echokompensatoren mit einem Transversalfilter.

Echokompensatoren werden in internationalen Kopfämtern an den Schnittstellen zwischen einer internationalen Fernleitung großer Länge, wie einer Seekabel- oder Satellitenverbindung und einer nationalen, in einen Vierdraht-Zweidrahtübergang in Form einer Gabel und in eine anschließende Zweidrahtleitung mündenden Leitung, dem sogenannten End-Echoweg, angeordnet.

In dem NTC 1979 Conference Record Vol.3 IEEE Catalog Number 79 CH 1514-9, Seiten 48.5.1 bis 48.5.5 ist eine Prüfanordnung für Echokompensatoren mit Restechobegrenzer beschrieben, bei der sowohl in den Empfangsweg als auch in den Sendewegeingang jeweils ein Rauschsignal eingespeist wird. Am Sendewegausgang muß der Pegel nach einer definierten Zeit unter - 40 dbm0 abgesunken sein.

Fig. 1a  zeigt ein Übertragungssystem mit Echokomensator nach dem Stand der Technik,

Fig. 1b  zeigt die erfindungsgemäße Prüfeinrichtung - sie wird am Schluß behandelt - ,

Fig. 2  zeigt ein Transversalfilter und

Fig. 3  zeigt den zeitlichen Ablauf der Berechnung der Koeffizienten im Transversalfilter nach Fig. 2,

Fig. 4  zeigt ein Laufzeitglied,

Fig. 5  zeigt einen Quasi-Zufallsgenerator und

Fig. 6  zeigt einen Prozessor.

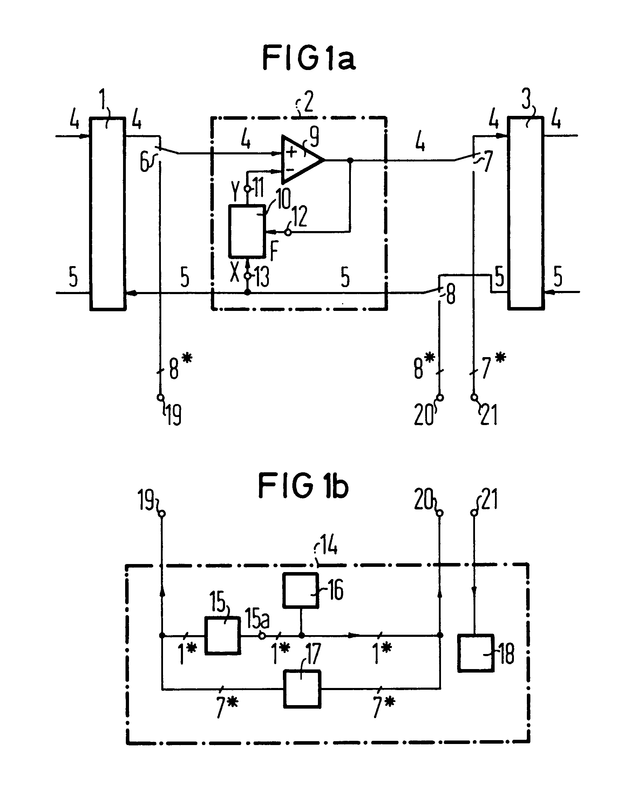

Fig. 1a zeigt das Übertragungssystem nach dem Stand der Technik mit PCM-Systemen 1 und 3, einem Echokompensator 2, einem Sendeweg 4 und einem Empfangsweg 5. Im Echokompensator 2 sind dessen Hauptelemente, eine Subtrahierschaltung 9 und ein Transversalfilter 10 gezeigt. Die Umschalter 6,7 und 8 befinden sich in der Schaltstellung für normalen Betrieb; die andere Schaltstellung ermöglicht eine Prüfung des Echokompensators 2. Links vom PCM-System 1 befindet sich ein naher Teilnehmer, rechts vom PCM-System 3 ein ferner Teilnehmer.

Trennen die Gabeln den Hin- und Rückweg nicht vollständig, so entstehen durch die Laufzeit des Signals bedingt Echos. Von der Sendestelle gelangt ein Sprachsignal nach der Verzögerungszeit über den Hin- und Rückweg gedämpft zum Sprecher zurück.

Sprachechokompensatoren enthalten ein adaptives Transversalfilter mit etwa vierhundert Koeffizienten zur Nachbildung des Endechowegs. Sollen alle Koeffizienten überprüft werden, dann ist eine aufwendige Prüfeinrichtung erforderlich, die alle möglichen Reflexionsstellen simulieren kann.

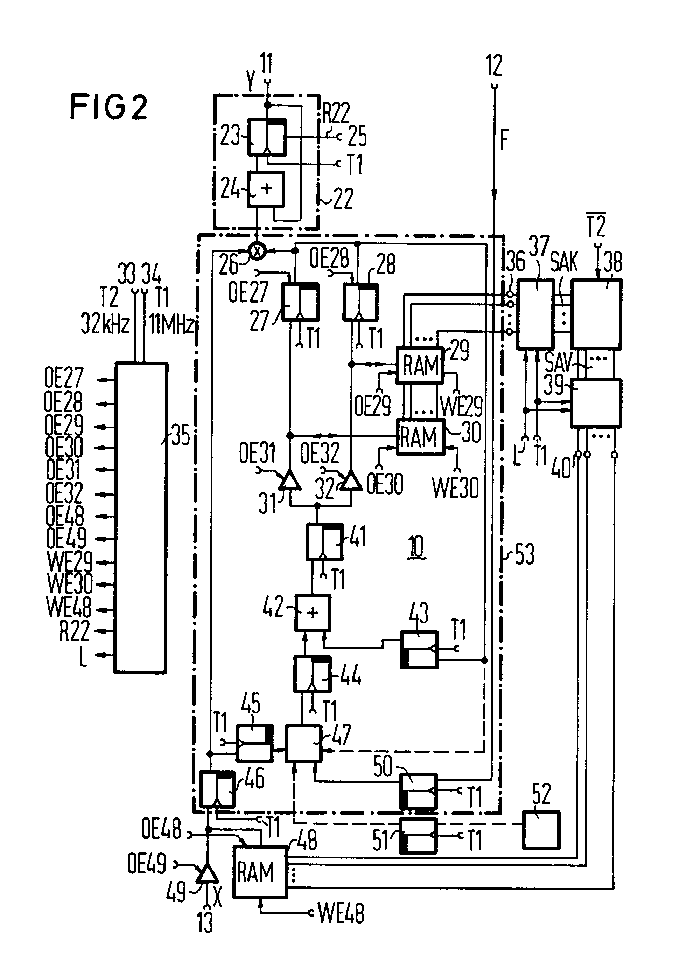

Fig. 2 zeigt ein Transversalfilter. Es enthält einen Akkumulator 22 mit Rücksetzeingang 25, ein Bewertungselement 53, eine Ablaufsteuerung 35 mit einem Eingang 33 für einen Systemtakt T2 und einen Eingang 34 für einen Takt T1, einen Startadreßzähler 38, Adreßzähler 37 und 39, einen Verzögerungsspeicher 48, einen Verstärker 49, ein flankengesteuertes D-Flipflop 51 und eine Sprach-Steuerschaltung 52.

Der Akkumulator 22 enthält ein flankengesteuertes D-Flipflop 23 und einen Summierer 24.

Das Bewertungselement 53 enthält einen Multiplizierer 26, Koeffizientenspeicher 29 und 30, Verstärker 31 und 32, flankengesteuerte D-Flipflops 27,28,41,43,44,45,46 und 50, einen Addierer 42 und einen Korrelator 47. Diese Anordnung zeigt detailliert das Transversalfilter 10 in Fig. 1a.

Ein auf dem Empfangweg 5 eintreffender digitaler Neuwert X wird über einen Eingang 13 und den Verstärker 49 dem Verzögerungsspeicher 48 zugeführt. Gleichzeitig wird am Eingang 12 ein vom Ausgang des Subtrahierers 9 stammendes Fehlersignal F empfangen. Aufgrund dieser Signale stellen sich in dem Bewertungselement 53 die Koeffizienten derart selbständig ein, daß das an einem Ausgang 11 auftretende Akkumulationsergebnis Y dem am Sendeweg 4 anliegenden Signal am ähnlichsten wird. Die vom Subtrahierer 9 gebildete Differenz der beiden Signale wird am kleinsten.

Die Ablaufsteuerung 35 wird mit dem Systemtakt T2 am Eingang 33 gestartet. Sie läuft mit dem Takt T1 am Eingang 34 ebenso wie die Adreßzähler 37 und 39 sowie die flankengesteuerten D-Flipflops 23,27,28,41,43,44,45,46,50 und 51. Ein mit der Rückflanke geschalteter Systemtakt $\overline{T2}$ treibt den Startadreßzähler 38, der Startadressen SAK an den Adreßzähler 37 und Startadressen SAV an den Adreßzähler 39 abgibt.

Die Ablaufsteuerung 35 liefert Signale OE .. (Output Enable) zu den Schaltelementen, bei denen zwei Ausgänge zusammengeschaltet werden. Weiterhin werden Einschreibimpulse WE .. (Write Enable) und ein Ladesignal L für ein Laden der Adreßzähler 37 und 39 mit einer Startadresse erzeugt.

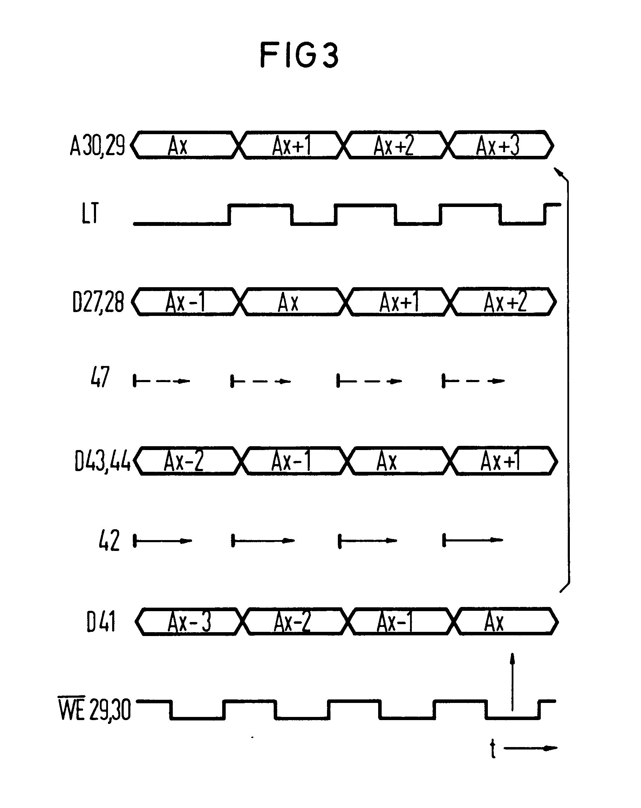

In Fig. 3 ist der zeitliche Ablauf der Berechnung im Transversalfilter 10 nach Fig. 2 dargestellt. Es sei angenommen, daß für die nachfolgende Erläuterung zuerst die Ablaufsteuerung 35 die Ausgangsstufe des Koeffizientenspeichers 30, das flankengesteuerte D-Flipflop 27 und den Verstärker 32 durchlässig geschaltet und einen Schreibtakt an den Koeffizientenspeicher 29 angelegt hat.

Fig. 3 zeigt in der ersten Zeile eine zeitliche Folge von Adressen A30 (bzw. A29) für den Koeffizientenspeicher 30 (bzw. 29). Kurz vor dem ersten Adreßwechsel werden mittels eines Lesetaktes LT, der in der zweiten Zeile dargestellt ist, die Daten aus der Adresse Ax zeitversetzt in das flankengesteuerte D-Flipflop 27 (bzw. 28) übernommen, wie es die dritte Zeile für die zugehörigen Daten D27 (bzw. D28) zeigt. Dabei ist die Periodendauer die maximal mögliche Adressenzugriffszeit. Von dem flankengesteuerten D-Flipflop 27 (bzw. 28) aus laufen die Daten D27 (bzw. D28) - wenn die in Fig. 2 gestrichelt dargestellte Leitung vorhanden ist - zum Korrelator 47, dessen Arbeiten die vierte Zeile andeutet und zum flankengesteuerten D-Flipflop 43, wie die fünfte Zeile zeigt. Die maximal mögliche Verzögerung durch den Korrelator 47 beträgt eine zweite Periodendauer. Am Ende eines nächsten Lesetaktes LT werden die Daten D44 vom flankengesteuerten D-Flipflop 44 übernommen und mit den Daten D43 des flankengesteuerten D-Flipflops 43 infolge der vorgesehenen Verzögerung zeitlich richtig addiert und dem flankengesteuerten D-Flipflop 41 gemäß Zeile 7 zugeführt. Zeile 6 zeigt die Arbeitszeit des Addierers 42. Für das Einschreiben in den Koeffizientenspeicher 30 wird eine dritte Periodendauer benutzt. Diese erfolgt in Zeile 1; dann aber nicht wieder bei der Adresse Ax sondern bei der Adresse Ax + 3. Dieser dreifache Versatz von Lese- und Schreibadresse erfordert, daß bei jedem Beginn eines Berechnungszykluses die Adressen um jeweils drei Werte verschoben sein müssen, damit jeder Koeffizient in zeitlich konstantem Abstand zum Beginn berechnet werden kann. Zeile 8 zeigt den Einschreibimpuls für den Koeffizientenspeicher 29 (bzw. 30) (Einschreiben bei "0").

In den Verzögerungsspeicher 48 wird zu Beginn eines Berechnungszyklusses ein Neuwert X über den Verstärker 49 eingeschrieben. Das Einschreiben erfolgt bei jedem Bearbeitungszyklus in eine um Eins verschobene Adresse. Anschließend wird nur ausgelesen. Dabei müssen die Adressen derart an den Verzögerungsspeicher 48 gelegt werden, daß bei der Berechnung des n-ten Koeffizienten der Neuwert X von vor n $125$-$\mu$s-Abtastperioden ausgelesen wird.

Zu Beginn jeder Abtastperiode erfolgt - gesteuert von der Ablaufsteuerung 35 - außerdem die Ausgabe des akkumulierten Ausgangssignals Y der vorherigen Bearbeitungsperiode, das Rücksetzen des Akkumulators 22 mit dem Rücksetzimpuls R22, die Umschaltung des Innenwiderstandes von Ausgängen der Koeffizientenspeicher 29 und 30, der flankengesteuerten D-Flipflops 27 und 28 und der Verstärker 31 und 32, die Umschaltung der Schreibtakte WE29 und WE30 für die Koeffizientenspeicher 29 und 30 und das Laden der Startadressen SAK und SAV aus dem Startadreßzähler 38 für die Adreßzähler 37 und 39, die den Verzögerungsspeicher 48 und die Koeffizientenspeicher 29 und 30 steuern. Der Systemtakt T2 schaltet den Startadreßzähler 38 am Ende des Taktimpulses weiter. Der Querstrich über T2 soll letzteres andeuten.

Im Transversalfilter 10 können alle Koeffizienten für vier Echokompensatoren 2 im Zeitmultiplex bearbeitet werden. Durch den Versatz um den ungeraden Wert drei und eine nicht durch drei dividierbare Adressenzahl 2048 der Koeffizientenspeicher 29 und 30 erfolgt die Speicherung eines Koeffizienten immer unter einer anderen Adresse.

Aufgabe der Erfindung ist es, eine einfache Prüfeinrichtung für einen Echokompensator mit einem derartigen Transversalfilter anzugeben.

Diese Aufgabe wird erfindungsgemäß durch folgende Prüfeinrichtung gelöst: ein Amplitudengenerator, dessen 7-bit-Sendeweg-Amplitudenwerte am Sendewegeingangs-Anschluß, der am Sendewegeingang des Echokompensators anschließbar ist,

und dessen 7-bit-Empfangsweg-Amplitudenwerte am Empfangsweg-Anschluß anliegen, der am Empfangsweg anschließbar ist,

ein Quasi-Zufallsgenerator zur Erzeugung zufälliger Vorzeichen mit einer Periode, die größer als die maximal nachbildbare Laufzeit gewählt ist, dessen Ausgang zum einen über ein Laufzeitglied (15) mit dem Sendewegeingangs-Anschluß verbunden ist, und

eine Amplitudenwert-Überwachungseinrichtung, zum Prüfen, ob nach dem Anlegen der Amplitudenwerte der Amplitudenwert am Sendewegausgngs-Anschluß entsprechend den Eigenschaften des oder der Echokompensatoren nach vorgegebener Zeit auf einen Restwert abgeklungen ist.

Um sicherzustellen, daß der Echokompensator 2 beispielsweise für vier Sprachkanäle funktioniert, ist eine Prüfung mit lediglich einer Reflexionsstelle erforderlich, weil der entsprechende Koeffizient und auch jeder Neuwert x nacheinander in jede Adresse des Koeffizientenspeichers bzw. Verzögerungsspeichers eingeschrieben bzw. ausgelesen wird, und damit alle Adressen der Schreib-Lese-Speicher RAM überprüft sind.

Für die Anschaltung der Prüfeinrichtung ist es vorteilhaft, wenn im Sendeweg vor dem Eingang des Echokompensators ein erster Umschalter, im Sendeweg nach dem Ausgang des Echokompensators ein zweiter Umschalter und im Empfangsweg vor dem Eingang des Echokompensators ein dritter Umschalter derart vorgesehen sind, daß von Übertragung auf Prüfung umgeschaltet werden kann.

Die Prüfeinrichtung kann ein eigenes Gerät sein; die Prüfeinrichtung, der oder die Echokompensatoren und die Umschalter können aber auch integriert sein. Als Umschalter sind hier elektronische Umschalter zweckmäßig.

Der Amplitudengenerator kann in vorteilhafter Weise als Prozessor realisiert sein.

Fig. 1b zeigt die erfindungsgemäße Prüfeinrichtung 14. Diese enthält ein Laufzeitglied 15, einen Quasi-Zufallsgenerator 16, einen Amplitudengenerator 17 in Form eines Prozessors und eine Amplitudenwert-Überwachungseinrichtung 18, sowie Sendewegeingangs-Anschlüsse 19, Empfangsweg-Anschlüsse 20 und Sendewegausgangs-Anschlüsse 21. Ziffern mit einem * geben die Anzahl paralleler Leitungen an. Vor Beginn einer Prüfung werden die Umschalter 6, 7 und 8 aus den gezeigten Schaltstellungen umgelegt. Durch den bei der Beschreibung des Transversalfilters 10 erwähnten Adreßversatz braucht die Prüfung nur mit einer Reflexionsstelle zu erfolgen, um sicher zu stellen, daß der Echokompensator 2 beispielsweise für vier Sprachkanäle funktioniert.

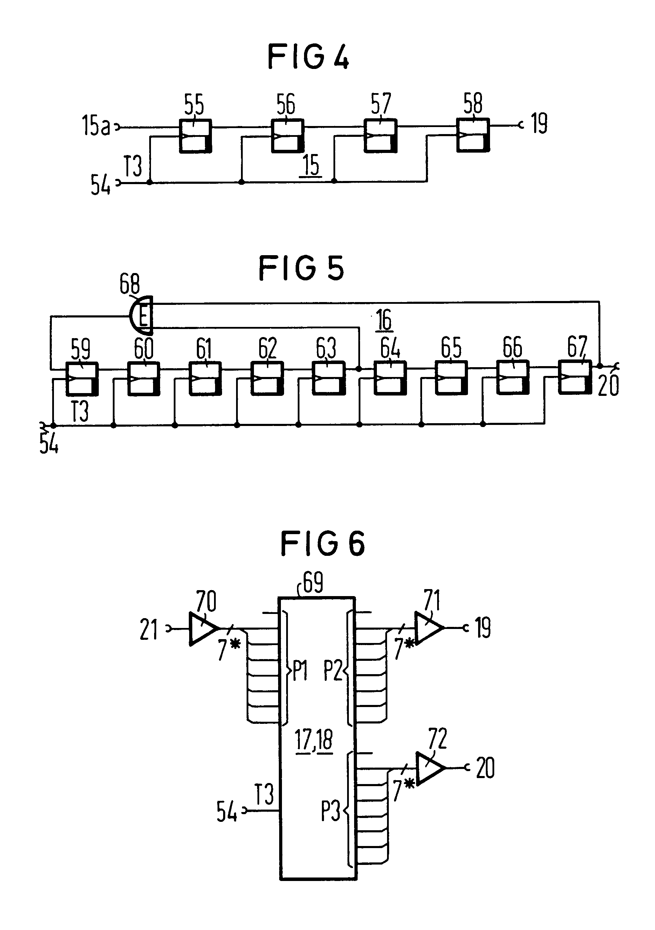

Das Laufzeitglied 15 ist in Fig. 4 detailliert dargestellt. Es besteht aus vier hintereinander geschalteten D-Flipflops 55 - 58 zwischen einem Eingang 15a und dem Senderwegeingangs-Anschluß 19 und wird mit einem Takt T3 einer Frequenz von 8 kHz betrieben.

Den Quasi-Zufallsgenerator 16 zeigt Fig. 5. Er besteht aus neun D-Flipflops 59 - 67 und einem Exklusiv-ODER-Gatter 68, über das rückgekoppelt wird. Sein Ausgang liegt am Empfangsweg-Anschluß 20.

Der Quasi-Zufallsgenerator 16 erzeugt zufällige Vorzeichen. Deren Periode muß größer als die maximal nachbildbare Laufzeit von beispielsweise $2^9$ - 1 sein. Diese Vorzeichen werden über das Laufzeitglied 15 geringfügig verzögert dem Sendewegeingangs-Anschluß 19 und unmittelbar dem Empfangswegeingangs-Anschluß 20 zugeführt.

Der Amplitudengenerator 17 erzeugt nach der PCM-Codierungsvorschrift 7-bit-Sendeweg-Amplitudenwerte am Sendewegeingangs-An schluß 19 und 7-bit-Empfangsweg-Amplitudenwerte am Empfangsweg-Anschluß 20. Die Erzeugung dieser Werte ist nicht sehr zeitkritisch; einige 125-$\mu$s-Perioden sind als Toleranz zulässig.

Die Amplitudenwerte des Amplitudengenerators 17 sind Zahlenwerte "0" bis "127". Um die maximale Größe der Koeffizienten überprüfen zu können, ist bei der PCM-Codierung nach dem A-Gesetz in den Sendeweg 4 ein um sechzehn kleinerer Amplitudenwert einzuspeisen als in den Empfangsweg 5, was nur für einen Zahlenbereich größer "31" gilt. Dies entspricht der minimal zulässigen Echodämpfung von 6db. Die Größe der Koeffizienten wird ein Minimum größer 0, wenn in den Empfangsweg 5 der Zahlenwert "127" und in den Sendeweg 4 der Zahlenwert "0" eingespeist wird.

Die Amplitudenwert-Überwachungseinrichtung 18 prüft, ob nach dem Anlegen der Amplitudenwerte an den Sendewegeingangs-Anschluß 19 und den Empfangsweg-Anschluß 20 der Amplitudenwert entsprechend den Eigenschaften des oder der Echokompensatoren 2 nach vorgegebener Zeit auf einen Restwert abgeklungen ist.

**Patentansprüche**

1. Prüfeinrichtung für digitale Echokompensatoren (2) bestehend aus
einem Amplitudengenerator (17) dessen 7-bit-Sendeweg-Amplitudenwerte am Sendewegeingangs-Anschluß (19), der am Sendewegeingang des Echokompensators (2) anschließbar ist, und dessen 7-bit-Empfangsweg-Amplitudenwerte am Empfangsweg-Anschluß (20) anliegen, der am Empfangsweg (5) anschließbar ist,
einem Quasi-Zufallsgenerator (16) zur Erzeugung zufälliger Vorzeichen mit einer Periode, die größer als die maximal nachbildbare Laufzeit gewählt ist, dessen Ausgang zum einen über ein Laufzeitglied (15) mit dem Sendewegeingangs-Anschluß (19) und unmittelbar mit dem Empfangsweg-Anschluß (20) verbunden ist, und
einer Amplitudenwert-Überwachungseinrichtung (18) zum Prüfen, ob nach dem Anlegen der Amplitudenwerte der Amplitudenwert am Sendewegausgangs-Anschluß (21) entsprechend den Eigenschaften des oder der Echokompensatoren (2) nach vorgegebener Zeit auf einen Restwert abgeklungen ist.

2. Prüfeinrichtung nach Anspruch 1,
**dadurch gekennzeichnet,**
daß im Sendeweg (4) vor dem Eingang des Echokompensators (2) ein erster Umschalter (6), im Sendeweg (4) nach dem Ausgang des Echokompensators (2) ein zweiter Umschalter (7) und im Empfangsweg (5) vor dem Eingang des Echokompensators (2) ein dritter Umschalter (8) derart vorgesehen sind, daß von Übertragung auf Prüfung umgeschaltet werden kann.

3. Prüfeinrichtung nach den Ansprüchen 1 und 2,
**dadurch gekennzeichnet,**
daß die Prüfeinrichtung (14), der Echokompensator (2) und die elektronischen Umschalter (6,7,8) integriert sind.

4. Prüfeinrichtung nach Anspruch 1,
**dadurch gekennzeichnet,**
daß als Amplitudengenerator (17) und als Amplituden-Auswerteeinrichtung (18) ein Prozessor vorgesehen ist.

## Claims

1. Test apparatus for digital echo cancellers (2), comprising an amplitude generator (17) whose 7-bit transmitting path amplitude values are present at the transmitting path input terminal (19) which can be connected to the transmitting path input of the echo canceller (2) and whose 7-bit receiving path amplitude values are present at the receiving path terminal (20) which can be connected to the receiving path (5), of a quasi-random generator (16) for generating random signs with a period which is selected to be greater than the maximum propagation time which can be simulated, the output of which generator is connected on the one hand via a delay element (15) to the transmitting path input terminal (19) and directly to the receiving path terminal (20), and of an amplitude value monitoring device (18) for testing whether, after the application of the amplitude values, the amplitude value at the transmitting path output terminal (21) has decayed in accordance with the properties of the echo canceller(s) (2) to a residual value after a predetermined time.

2. Test apparatus according to Claim 1, characterised in that a first change-over switch (6) is provided in the transmitting path (4) upstream of the input of the echo canceller (2), a second change-over switch (7) is provided in the transmitting path (4) downstream of the output of the echo canceller (2) and a third change-over switch (8) is provided in the receiving path (5) upstream of the input of the echo canceller (2) in such a way that switching over can occur from transmission to testing.

3. Test apparatus according to Claims 1 and 2, characterised in that the test apparatus (14), the echo canceller (2) and the electronic change-over switches (6, 7, 8) are integrated.

4. Test apparatus according to Claim 1, characterised in that a processor is provided as amplitude generator (17) and as amplitude evaluation device (18).

## Revendications

1. Dispositif de contrôle pour des compensateurs numériques d'échos (2), constitué par un générateur d'amplitudes (17), dont les valeurs d'amplitude dans la voie d'émission à 7 bits sont appliquées à la borne (19) d'entrée de la voie d'émission, qui peut être raccordée à l'entrée de la voie d'émission du compensateur d'échos (2), et dont les valeurs d'amplitude dans la voie de réception à 7 bits sont appliquées à la borne (20) de la voie de réception, qui peut être raccordée à la voie de réception (5),
un générateur de signaux quasi-aléatoires (16) servant à produire des signes aléatoires avec une période qui est choisie supérieure au temps de propagation maximum simulable, et dont la sortie est raccordée, d'une part, par l'intermédiaire d'un circuit de retardement (15), à la borne (19) d'entrée de la voie d'émission et directement à la borne (20) de la voie de réception, et
un dispositif (18) de contrôle des valeurs d'amplitude servant à contrôler si, après l'application des valeurs d'amplitude, la valeur d'amplitude présente sur la borne (21) de sortie de la voie d'émission est retombée à une valeur résiduelle conformément aux caractéristiques du ou des compensateurs d'échos (2), au bout d'un intervalle de temps prédéterminé.

2. Dispositif de contrôle suivant la revendication 1, caractérisé par le fait qu'il est prévu, dans la voie d'émission (4), un premier commutateur (6) en amont de l'entrée du compensateur d'échos (2), et, dans la voie d'émission (4), un second commutateur (7) en aval de la sortie du compensateur d'échos (2), et, dans la voie de réception (5), un troisième commutateur (8) en amont de l'entrée du compensateur d'échos (2), de sorte que l'on peut effectuer une commutation de la transmission au contrôle.

3. Dispositif de contrôle suivant les revendications 1 et 2, caractérisé par le fait que le dispositif de contrôle (14), le compensateur d'échos (2) et des commutateurs électroniques (6,7,8) sont intégrés.

4. Dispositif de contrôle suivant la revendication 1, caractérisé par le fait qu'il est prévu un processeur en tant que générateur d'amplitudes (17) et en tant que dispositif d'évaluation d'amplitudes (18).

## FIG 1a

## FIG 1b

FIG 2

# FIG 3

# FIG 4

# FIG 5

# FIG 6

9